# EUROPÄISCHE PATENTSCHRIFT

(11) **EP 3 839 518 B1**
(45) Veröffentlichungstag und Bekanntmachung des Hinweises auf die Patenterteilung: **07.06.2023**
(21) Anmeldenummer: 20208554.4
(22) Anmeldetag: 19.11.2020
(51) Int. Cl.: G01P 1/12, A63B 24/00, A63B 69/36, B65G 43/02

(54) **SYSTEM ZUR FORTLAUFENDEN ERFASSUNG EINER NUTZGRÖSSE UND DES LUFTSCHALLS**
SYSTEM FOR CONTINUOUS RECORDING OF AN EFFECTIVE QUANTITY AND AIRBORNE SOUND
SYSTÈME D'ENREGISTREMENT CONTINU D'UNE QUANTITÉ UTILE ET D'UN SON AÉRIEN

(30) Priorität: 20.12.2019 DE 102019008941
(43) Veröffentlichungstag der Anmeldung: 23.06.2021
(73) Patentinhaber: Benecke-Kaliko AG, 30419 Hannover (DE)
(72) Erfinder: Barho, Erhard, 30419 Hannover (DE); Lindner, Felix, 30419 Hannover (DE); Hidalgo Lucio, Gabriel Cristian, 30419 Hannover (DE); Kleiber, Arthur, 30419 Hannover (DE)
(74) Vertreter: Continental Corporation

(56) Entgegenhaltungen:
- CN-A- 110 239 914
- US-A1- 2014 018 181
- US-A1- 2015 317 801

## Beschreibung

Aus dem Stand der Technik sind Systeme mit einem Sensor zur fortlaufenden Erfassung einer mechanischen Größe bekannt. Der Sensor wird auch als Nutzsensor bezeichnet. Die mechanische Größe wird oft auch als Nutzgröße bezeichnet. Die Nutzgröße kann beispielsweise eine erfasste Beschleunigung, eine erfasste Geschwindigkeit, ein erfasster Weg, eine erfasste Kraft, ein erfasster Druck, ein erfasster Volumenstrom oder eine erfasste Temperatur sein. Außerdem sind Systeme mit derartigen Nutzsensoren bekannt. Bei bewegten Bauteilen wird ein Nutzsensor oftmals eingesetzt, um eine beschleunigte Bewegung des Bauteils zu erfassen. Es ist aber auch möglich, dass ein Nutzsensor an dem bewegten Bauteil eingesetzt wird, um eine auf das Bauteil wirkende Kraft zu erfassen. Wird mittels des Nutzsensors beispielsweise eine auf ein Bauteil wirkende Kraft fortlaufend erfasst, ist der aktuelle Wert der Nutzgröße immer die aktuell auf das Bauteil wirkende Kraft. Um nicht nur auf den aktuellen Wert der Nutzgröße zugreifen zu können, ist es aus dem Stand der Technik bekannt, den Wert der Nutzgröße in einem Datenspeicher zu speichern, um den Verlauf der Nutzgröße über die Zeit darstellen zu können. Die Darstellung der Nutzgröße über die Zeit kann vorteilhaft verwendet werden, um die Belastungen auf das Bauteil zu bewerten, die während der Zeit auf das Bauteil wirken. Mit der Aufzeichnung der Nutzgröße wird der Datenspeicher jedoch kontinuierlich mit Daten gefüllt, die die zuvor erfasste Nutzgröße repräsentieren. Naturgemäß ist der Datenspeicher nur mit einer begrenzten Speicherkapazität ausgestattet. In der Praxis wird die Nutzgröße deshalb oftmals nicht kontinuierlich aufgezeichnet, sondern in ausreichend großen Zeitabständen, so dass durch eine Interpolation der gespeicherten Werte der Nutzgröße ebenfalls eine Aussage über die vergangene Belastung des Bauteils abgeleitet werden kann.

Auch wenn die vorangegangene Erläuterung in Bezug zu einem Bauteil mit einem Nutzsensor erläutert worden ist, der beispielsweise die auf das Bauteil wirkende Kraft erfassen kann, so ist es für die zuvor genannten, alternativen Nutzgrößen ebenfalls möglich, dass entsprechende technische Effekte und Nachteile entstehen können. Denn die fortlaufende Erfassung jeder der beispielhaft genannten Nutzgrößen verursacht eine große Datenmenge, die zumeist nicht vollständig von dem Datenspeicher gespeichert werden kann. Es wird deshalb auf die periodische Speicherung der Werte der Nutzgröße zurückgegriffen, wobei die Periodendauer sehr groß gewählt ist, beispielsweise mehrere Sekunden, Minuten oder Stunden.

Wird eine Nutzgröße nicht kontinuierlich sondern periodisch mit einer großen Periodendauer zwischen den Aufzeichnungszeitpunkten gespeichert, hat es sich in der Praxis als Nachteil herausgestellt, dass das Nutzsignal auch dann mit der entsprechend großen Periodendauer aufgezeichnet wird, wenn ein Ereignis auftritt, bei dem eine kontinuierliche oder zumindest sehr präzise Erfassung und Speicherung der Werte der Nutzgröße von Vorteil wären, um das Ereignis besser auswerten zu können. Ist das Ereignis beispielsweise ein mechanischer Bruch und/oder eine andere mechanische Störung an einem Bauteil, an dem der Nutzsensor beispielsweise die auf das Bauteil wirkende Kraft als die Nutzgröße fortlaufend erfasst, so wäre es bei dem Ereignis wünschenswert, wenn die Werte der Nutzgröße im Nachhinein fortlaufend erfasst und mit einer möglichst kleinen Abtastgröße in den Datenspeicher gespeichert wurden. Dies würde eine genaue Auswertung des Ereignisses anhand des sehr präzisen rekonstruierbaren Verlaufs der als Nutzgröße erfassten Kraft ermöglichen.

Wie zuvor erläutert, hat jeder Datenspeicher jedoch eine begrenzte Speicherkapazität, so dass der Wunsch einer fortlaufenden Erfassung und kontinuierlichen Speicherung der Nutzgröße praktisch nicht umsetzbar ist.

Die US 2015/0317801 A1 betrifft ein System zur Aufzeichnung und Analyse von Bewegungsdaten, anhand derer Videosegmente identifiziert und zugeschnitten werden können, die zu einem Ereignis gehören. Hierbei werden auf Basis aufgezeichneter Bewegungsdaten mögliche Ereignisse detektiert. Anhand weiterer Sensordaten, z.B. Audiodaten, können diese möglichen Ereignisse anschließend verifiziert werden.

Die US 2014/0018181 A1 offenbart eine Applikation für Mobilgeräte zum virtuellen Golfcoaching. Hierbei wird das Mobilgerät an der Hüfte des Spielers positioniert, um mittels Bewegungssensoren die Hüftbewegung während eines Golfschlages zu tracken. Zudem wird das Mikrofon des Mobilgerätes dazu verwendet, den Zeitpunkt zu bestimmen, an dem der Golfschläger auf dem Ball auftrifft.

Der Erfindung liegt deshalb die Aufgabe zugrunde, ein System bereitzustellen, das eine fortlaufende Erfassung der Nutzgröße und Speicherung der Werte der fortlaufenden Erfassung der Nutzgröße derart erlaubt, dass bei dem Auftreten eines Ereignisses eine präzise Analyse des Ereignisses basierend auf den gespeicherten Werten der Nutzgröße möglich ist.

Gemäß der Erfindung wird die zuvor genannte Aufgabe gelöst durch ein System mit den Merkmalen des Anspruchs 1. Vorgesehen ist also ein System, das einen Schallsensor zur fortlaufenden Erfassung von Luftschall, einen Nutzsensor zur fortlaufenden Erfassung einer Nutzgröße, eine Prozessoreinheit und einen Datenspeicher aufweist. Die Nutzgröße ist eine Beschleunigung, eine Geschwindigkeit, ein Weg, eine Kraft, ein Druck, ein Volumenstrom oder eine Temperatur. Der Schallsensor ist zur Erzeugung eines Schallsignals, das den von dem Schallsensor erfassten Luftschall fortlaufend repräsentiert, und zur Übertragung des Schallsignals an die Prozessoreinheit ausgebildet. Der Nutzsensor ist zur Erzeugung eines Nutzsignals, das die Nutzgröße fortlaufend repräsentiert, und zur Übertragung des Nutzsignals an die Prozessoreinheit ausgebildet. Die Prozessoreinheit ist konfiguriert, basierend auf dem Schallsignal ein vorbestimmtes Schallmuster in dem fortlaufend erfassten Luftschall zu erkennen und bei einem positiv erkannten Schallmuster einen Ereigniszeitpunkt des Auftretens des Schallmusters im Luftschall zu bestimmen. Außerdem ist die Prozessoreinheit konfiguriert, Ereignisdaten im Datenspeicher zu speichern, die die zum Ereigniszeitpunkt erfasste Nutzgröße und die während eines vorbestimmten Aufzeichnungszeitraums unmittelbar nach dem Ereigniszeitpunkt erfasste Nutzgröße repräsentiert.

Der Nutzsensor des Systems ist zur fortlaufenden Erfassung einer Nutzgröße ausgebildet. Der Nutzsensor kann beispielsweise an einer Vorrichtung befestigt sein oder mit dieser gekoppelt sein. Der Nutzsensor kann somit zur fortlaufenden Erfassung einer Nutzgröße der Vorrichtung ausgebildet sein. Eine Erfassung einer Nutzgröße wird vorzugsweise dann als fortlaufend verstanden, wenn die Erfassung der Nutzgröße mit einer vorbestimmten Abtastfrequenz erfolgt. Die vorbestimmte Abtastfrequenz kann beispielsweise mindestens 5 Hz, mindestens 10 Hz, mindestens 15 Hz, mindestens 20 Hz, mindestens 50 Hz oder mindestens 100 Hz betragen. Grundsätzlich kann die Abtastfrequenz auch eine andere für die Aufzeichnung von Messdaten übliche Frequenz haben. Wenn ein Ereignis, insbesondere ein Ereignis an der Vorrichtung, eintritt, kann durch die fortlaufende Erfassung der Nutzgröße gewährleistet werden, dass die Nutzgröße auch während des Ereignisses fortlaufend erfasst ist. Die erfassten Werte der Nutzgröße können somit darüber Aufschluss geben, wie der Verlauf der Nutzgröße zum Zeitpunkt des Ereignisses, aber auch in dem Zeitraum vor dem Ereignis oder in dem Zeitraum nach dem Ereignis ist. Wie eingangs erläutert, ist es praktisch nicht umsetzbar, alle Werte der Nutzgröße kontinuierlich in dem Datenspeicher zu speichern. In der Praxis wurde jedoch festgestellt, dass Ereignisse, also insbesondere mechanische Ereignisse an der Vorrichtung, oftmals mit einem lauten Geräusch, Knall oder anderer sehr lauter Geräuschentwicklungen einhergehen. Geräusche werden durch die Luft als Luftschall übertragen. Wenn ein Ereignis an der Vorrichtung auftritt, an der der Nutzsensor befestigt ist, oder wenn der Nutzsensor mit der Vorrichtung gekoppelt ist und ein Ereignis an der Vorrichtung auftritt, so wird der fortlaufend vom Schallsensor erfasste Luftschall ein Schallmuster aufweisen, das für das Eintreten des Ereignisses charakteristisch ist. Bricht beispielsweise eine Vorrichtung oder stößt die Vorrichtung auf einen festen Gegenstand, so wird das jeweilige Ereignis mit einem entsprechenden Bruchgeräusch oder Aufschlaggeräusch einhergehen. Das Aufschlaggeräusch oder das Bruchgeräusch kann als ein Schallmuster vorbestimmt sein und vorzugsweise von dem Datenspeicher durch entsprechende Daten gespeichert sein. Dieses vorbestimmte Schallmuster kann somit verwendet werden, um den fortlaufend erfassten Luftschall auf ein Vorhandensein des vorbestimmten Schallmusters zu untersuchen. Dies kann mittels der Prozessoreinheit des Systems erfolgen. Die Prozessoreinheit ist deshalb konfiguriert, basierend auf dem erfassten Luftschall, das vorbestimmte Schallmuster in dem fortlaufend erfassten Luftschall zu erkennen. Außerdem ist die Prozessoreinheit dazu konfiguriert, bei einem positiv erkannten Schallmuster in dem fortlaufend erfassten Luftschall ein Ereigniszeitpunkt des Auftretens des Schallmusters im erfassten Luftschall zu bestimmen. Steht der Ereigniszeitpunkt fest, ist es von Vorteil, wenn die Werte der nachfolgend erfassten Nutzgröße in dem Datenspeicher gespeichert werden, so dass die Nutzgröße durch diese gespeicherten Daten für einen vorbestimmten Aufzeichnungszeitraum gesichert sind. Es ist deshalb vorgesehen, dass die Prozessoreinheit konfiguriert ist, Ereignisdaten im Datenspeicher zu speichern, die die zum Ereigniszeitpunkt erfasste Nutzgröße und die während eines vorbestimmten Aufzeichnungszeitraums unmittelbar nach dem Ereigniszeitpunkt erfasste Nutzgröße repräsentiert. Der Aufzeichnungszeitraum kann an die Nutzung des Nutzsensors und/oder an die Vorrichtung angepasst sein. In der Praxis hat es sich als vorteilhaft herausgestellt, wenn der Aufzeichnungszeitraum zwischen 5 Sekunden und 5 Minuten beträgt. Findet ein Ereignis an der Vorrichtung statt, so dass ein Schallmuster durch den Luftschall und vor dem Schallsensor erfasst wird, so ist es mittels der Prozessoreinheit des Systems möglich, das Schallmuster basierend auf dem vorbestimmten Schallmuster positiv zu erkennen, daraufhin einen Ereigniszeitpunkt zu bestimmen und nach der Bestimmung des Ereigniszeitpunkts die Werte der Nutzgröße in den Ereignisdaten im Datenspeicher derart zu speichern, dass die Ereignisdaten die Werte der Nutzgröße am Ereigniszeitpunkt und die Werte der Nutzgröße über den Aufzeichnungszeitraum repräsentieren. Mittels der Ereignisdaten ist es deshalb im Anschluss möglich, eine Auswertung des Ereignisses vorzunehmen. Ist die Nutzgröße beispielsweise eine auf die Vorrichtung wirkende Kraft, so kann anhand der Ereignisdaten festgestellt werden, wie der Verlauf der auf die Vorrichtung wirkenden Kraft im Anschluss an das Ereignis war. Die Nutzgröße ist aber nicht zwingend eine Kraft. Die Nutzgröße kann auch eine Beschleunigung oder eine Geschwindigkeit sein. Die Nutzgröße kann beispielsweise die auf die Vorrichtung wirkende Beschleunigung oder die Geschwindigkeit der Vorrichtung sein.

Grundsätzlich kann die Vorrichtung eine beliebige Vorrichtung sein. So kann die Vorrichtung beispielsweise eine Transportvorrichtung, ein Fahrzeug, ein Golfschläger oder die Kabine eines Fahrstuhls sein. Die beispielhaft genannten Vorrichtungen sind nicht einschränkend zu verstehen und bilden nur Beispiele für die Ausgestaltung einer Vorrichtung. Wenn die Vorrichtung nun beispielsweise ein Golfschläger ist, an dem der Nutzsensor befestigt ist, wobei der Nutzsensor zur Erfassung der auf den Golfschläger wirkenden Beschleunigung ausgebildet ist, so kann der Schallsensor zur fortlaufenden Erfassung des Luftschalls ausgebildet sein, um den Schlag des Golfschlägers auf einen Ball als Ereignis zu erfassen. Der Schlag des Golfschlägers auf einen Ball verursacht ein Schlaggeräusch. Dies kann als ein vorbestimmtes Schallmuster durch entsprechende Daten in dem Datenspeicher gespeichert sein. Die Prozessoreinheit kann auf diese Daten des Datenspeichers zugreifen. Außerdem kann die Prozessoreinheit basierend auf dem Schallsignal, das den fortlaufend erfassten Luftschall repräsentiert, das vorbestimmte Schallmuster, nämlich in diesem Beispiel das Schlaggeräusch eines Golfschlägers auf einen Ball, erkennen und dadurch den Ereigniszeitpunkt bestimmen. Da der Nutzsensor als Beschleunigungssensor an dem Golfschläger befestigt ist, werden von der Prozessoreinheit Ereignisdaten in den Datenspeicher gespeichert, die die Beschleunigung im Zeitpunkt des Aufschlagens des Golfschlägers auf den Ball sowie im anschließenden Aufzeichnungszeitraum repräsentieren. Die Ereignisdaten erlauben eine präzise Auswertung des Ereignisses, nämlich das Aufschlagen des Golfschlägers auf den Ball. Dies kann nützlich sein, um die Konstruktion des Golfschlägers zu verbessern. Es ist aber auch möglich, dass mit den Ereignisdaten eine Anpassung der technischen Maße des Golfschlägers ausgeführt wird, so dass eine Person mit diesem derart angepassten Golfschläger besonders gut Golf spielen kann. Darüber hinaus ist es möglich, dass die Ereignisdaten verwendet werden, um den Bewegungsablauf des Spielers beim Aufschlagen auf den Ball zu verbessern.

Grundsätzlich ist die Verwendung des Systems nicht auf die konstruktive oder anderweitige Anpassung des Golfschlägers begrenzt. Ist die Vorrichtung beispielsweise an einer Spannvorrichtung eines Transportsystems befestigt, bei dem ein Riemen zumindest zwei Umlenkrollen umschlingt, um dadurch ein Transportband zu bilden, so kann die Nutzgröße beispielsweise eine Kraft sein und der Nutzsensor ein Kraftsensor sein. Der Kraftsensor kann derart an der Spannvorrichtung befestigt und/oder mit dieser in funktionaler Beziehung angeordnet sein, dass mittels des Kraftsensors die auf die Spannvorrichtung wirkende Kraft erfassbar ist. Sollte ein Bruch an dem Transportbandsystem, insbesondere an dem Riemen, auftreten, wird dies ebenfalls mit einem charakteristischen Geräusch, das ein vorbestimmtes Schallmuster hat und als solches durch entsprechende Referenzdaten in dem Datenspeicher gespeichert ist, einhergehen. Sollte das Ereignis eintreten, dass ein Bruch des Riemens eintritt und das charakteristische Geräusch über den Luftschall zu dem Schallsensor gelangt, wird in analoger Weise zu den vorangegangenen Erläuterungen ein Ereigniszeitpunkt positiv festgestellt und eine Speicherung der Ereignisdaten mittels der Prozessoreinheit ausgeführt. Die Ereignisdaten repräsentieren in dem Fall die auf die Spannvorrichtung wirkende Kraft während des Ereigniszeitpunkts sowie während des Aufzeichnungszeitraums.

Wie zuvor erläutert, ist es vorgesehen, dass die Prozessoreinheit konfiguriert ist, Ereignisdaten im Datenspeicher zu speichern, die max. die Nutzgröße im Ereigniszeitpunkt und während des Aufzeichnungszeitraums im Anschluss an den Ereigniszeitpunkt repräsentieren. Dadurch kann die Menge der im Datenspeicher zu speichernden Daten begrenzt werden. Darüber hinaus sind die Ereignisdaten in einem funktionalen Zusammenhang mit dem aufgetretenen Ereignis. Es hat sich deshalb als vorteilhaft herausgestellt, wenn die Prozessoreinheit so konfiguriert ist, dass keine Speicherung von die Nutzgröße repräsentierenden Daten im Datenspeicher erfolgt, wenn dies nicht durch eine positive Erkennung des Schallmusters verursacht ist. Sofern also kein vorbestimmtes Schallmuster mittels der Prozessoreinheit in dem fortlaufend erfassten Schallmuster erkannt wird, erfolgt auch keine Speicherung der die Nutzgröße repräsentierenden Daten. Unter Bezugnahme auf das Beispiel im Zusammenhang mit dem Golfschläger werden also die die Nutzgröße repräsentierenden Ereignisdaten erst dann gespeichert, wenn der Golfschläger auf den Ball trifft, dies als ein Ereignis positiv festgestellt wird und der Ereigniszeitpunkt bestimmt wurde.

Das System wurde zuvor mit einem Nutzsensor erläutert. Grundsätzlich kann das System auch weitere Nutzsensoren zur fortlaufenden Erfassung einer Nutzgröße aufweisen. Die Nutzgrößen können unterschiedlich sein. Die Nutzgrößen können dabei eine Beschleunigung, eine Geschwindigkeit, ein Weg, eine Kraft, ein Druck, ein Volumenstrom oder eine Temperatur sein. So kann eine der Nutzgrößen beispielsweise die Kraft und eine andere Nutzgröße beispielsweise die Beschleunigung sein. Die von der Prozessoreinheit im Datenspeicher gespeicherten Ereignisdaten können bei mehreren Nutzsensoren des Systems die jeweilige Nutzgröße im Ereigniszeitpunkt und die jeweilige Nutzgröße während des vorbestimmten Aufzeichnungszeitraums unmittelbar nach dem Ereigniszeitpunkt repräsentieren.

Eine vorteilhafte Ausgestaltung des Systems zeichnet sich dadurch aus, dass der Schallsensor in einem Sensorabstand zu dem Nutzsensor angeordnet ist, wobei der Sensorabstand kleiner als ein vorbestimmter Maximalabstand, insbesondere von maximal 10 Metern, ist.

Durch die Begrenzung des Abstands, nämlich dem Sensorabstand zwischen dem Schallsensor und dem Nutzsensor auf max. den vorbestimmten Maximalabstand, kann gewährleistet werden, dass der von dem Schallsensor erfasste Luftschall und die von dem Nutzsensor erfasste Nutzgröße in einem funktionalen Zusammenhang stehen, zumindest dann, wenn ein Ereignis stattfindet. Findet beim Ereignis beispielsweise ein Bruch oder ein Schlag der Vorrichtung statt, so wird das dadurch hervorgerufene Schallmuster von dem Schallsensor auch dann erfasst, wenn dieser 10 m von der Vorrichtung entfernt ist, an der der Nutzsensor befestigt ist oder mit der der Nutzsensor in mechanischer Wechselwirkung steht. Durch die mechanische Wechselwirkung oder Befestigung des Nutzsensors an der Vorrichtung wird die von dem Nutzsensor erfasste Nutzgröße das Ereignis durch eine entsprechende Veränderung der erfassten Nutzgröße repräsentieren. Dadurch steht die von dem Nutzsensor erfasste Nutzgröße auch im funktionalen Zusammenhang mit dem von dem Nutzsensor erfassten Luftschall.

Eine vorteilhafte Ausgestaltung des Systems zeichnet sich dadurch aus, dass die Prozessoreinheit konfiguriert ist, basierend auf dem Nutzsignal ein vorbestimmtes Referenzmuster in der fortlaufend erfassten Nutzgröße zu erkennen und bei einem positiv erkannten Referenzmuster in der Nutzgröße ein Referenzzeitpunkt des Auftretens des Referenzmusters zu bestimmen, wobei die Prozessoreinheit außerdem konfiguriert ist, die Ereignisdaten nur dann im Datenspeicher zu speichern, wenn ein Zeitabstand zwischen dem Ereigniszeitpunkt und dem Referenzzeitpunkt kleiner als ein vorbestimmter Schwellwert, insbesondere 0,5 Sekunden, ist. Ähnlich wie bei dem vorbestimmten Schallmuster in dem fortlaufend erfassten Luftschall ist das vorbestimmte Referenzmuster in der fortlaufend erfassten Nutzgröße ein Indikator dafür, dass ein Ereignis stattgefunden hat. Der Referenzzeitpunkt ist dabei der Zeitpunkt des Auftretens des vorbestimmten Referenzmusters in der fortlaufend erfassten Nutzgröße. Das Referenzmuster kann durch Referenzdaten im Datenspeicher (vorab) gespeichert sein. Das Referenzmuster kann beispielsweise die auf einen Golfschläger wirkende Beschleunigung beim Aufschlagen des Golfschlägers auf einen Ball repräsentieren. Ist der Nutzsensor an dem Golfschläger befestigt, so kann das Aufschlagen des Golfschlägers auf den Ball anhand der fortlaufend erfassten Nutzgröße erkannt werden, indem die Erkennung des vorbestimmten Referenzmusters in der fortlaufend erfassten Nutzgröße erfolgt. Der Referenzzeitpunkt ist dabei der Zeitpunkt, an dem das Referenzmuster in der Nutzgröße erfasst wird und repräsentiert somit auch den Zeitpunkt des Aufschlagens des Golfschlägers auf den Ball. In entsprechender Weise repräsentiert der Ereigniszeitpunkt das Erfassen des vorbestimmten Schallmusters in dem fortlaufend erfassten Luftschall und damit auch den Zeitpunkt des Aufschlagens des Golfschlägers auf den Ball. Durch die Zeitverzögerung des Schalls und/oder durch die Zeitverzögerung der Übertragung der Beschleunigung von der Schlägerspitze zu dem Nutzsensor kann eine kleine Abweichung zwischen dem Ereigniszeitpunkt und dem Referenzzeitpunkt auftreten. Sofern der Zeitabstand zwischen dem Ereigniszeitpunkt und dem Referenzzeitpunkt kleiner als der vorbestimmte Schwellwert ist, ist dies ein Indikator dafür, dass tatsächlich ein Ereignis stattgefunden hat und die Speicherung der Ereignisdaten im Datenspeicher aufzuführen ist. Ist der Zeitabstand hingegen größer als der Schwellwert oder entspricht er dem Schwellwert, so ist dies ein Indikator dafür, dass tatsächlich kein Ereignis stattgefunden hat. Wird von dem fortlaufend erfassten Luftschall ein Schallmuster repräsentiert, jedoch von der fortlaufend erfassten Nutzgröße nicht das vorbestimmte Referenzmuster, kann dies beispielsweise dadurch verursacht werden, dass ein anderer Golfschläger auf den Ball schlägt. Dies ist für die Aufzeichnung der Ereignisdaten jedoch nicht hilfreich, da nur das Aufschlagen des zuvor genannten Golfschlägers auf den Ball von Interesse ist. Mit anderen Worten findet die Speicherung der Ereignisdaten im Datenspeicher nur dann statt, wenn eine redundante positive Erkennung stattfindet, also die positive Erkennung des Referenzmusters in der fortlaufenden Nutzgröße sowie die positive Erkennung des Schallmusters in dem fortlaufend erfassten Luftschall. Dadurch können Fehler bei der Speicherung der Ereignisdaten und/oder bei der Erkennung des Ereignisses verhindert werden.

Eine weitere vorteilhafte Ausgestaltung des Systems zeichnet sich dadurch aus, dass die Prozessoreinheit konfiguriert ist, die jeweils aktuell erfasste Nutzgröße durch Pufferdaten in den Datenspeicher zu speichern, wobei die Prozessoreinheit außerdem konfiguriert ist, die Pufferdaten fortlaufend derart zu aktualisieren, dass die Pufferdaten immer nur die zum aktuellen Zeitpunkt erfasste Nutzgröße und die aus einem vorbestimmten Pufferzeitraum unmittelbar vor dem aktuellen Zeitpunkt erfasste Nutzgröße repräsentieren und wobei die Prozessoreinheit konfiguriert ist, die Ereignisdaten im Datenspeicher derart zu speichern, dass die Ereignisdaten die zum Ereigniszeitpunkt erfasste Nutzgröße, die aus einem vorbestimmten Vorlaufzeitraum unmittelbar vor dem Ereigniszeitpunkt erfasste Nutzgröße und die während eines vorbestimmten Aufzeichnungszeitraums unmittelbar nach dem Ereigniszeitpunkt erfasste Nutzgröße repräsentieren und wobei die Vorlaufzeit kaum kleiner als der Pufferzeitraum oder gleich dem Pufferzeitraum ist. In der Praxis wurde festgestellt, dass die Daten der Nutzgröße während des Vorlaufzeitraums, also dem entsprechenden Zeitraum vor dem Eintreten des Ereignisses, ebenfalls von Interesse sein können. Ist die Nutzgröße beispielsweise die auf eine Vorrichtung einer Transportvorrichtung wirkende Kraft, kann es beispielsweise von Interesse sein, wie groß die Kraft vor dem Bruch eines Riemens der Vorrichtung war. Denn der Verlauf der Kraft vor dem Bruch des Riemens kann darüber Aufschluss geben, ob der Bruch des Riemens durch Überlastung, nämlich eine zu hohe auf den Riemen und/oder die Spannvorrichtung wirkende Kraft, oder durch andere Ursachen bewirkt wurde. Um zu verhindern, dass die Nutzgröße kontinuierlich durch entsprechende Daten in den Datenspeicher gespeichert werden muss, ist es vorgesehen, dass die Pufferdaten die Nutzgröße für den aktuellen Zeitpunkt und für den vorbestimmten Pufferzeitraum unmittelbar vor dem aktuellen Zeitpunkt repräsentiert. Die Pufferdaten werden fortlaufend aktualisiert, so dass bei der Erfassung eines neuen Werts der Puffergröße der älteste Wert der Nutzgröße aus den Pufferdaten gelöscht und der zuletzt erfasste Wert der Puffergröße von den Pufferdaten repräsentiert wird. Dadurch kann gewährleistet werden, dass die Pufferdaten die Nutzgröße des aktuellen Zeitpunkts und auch des mit fortschreitender Zeit sich verändernden Pufferzeitraums repräsentiert. Der Vorlaufzeitraum ist kleiner als der Pufferzeitraum oder entspricht dem Pufferzeitraum. Wird ein Ereignis erkannt, werden die Ereignisdaten im Datenspeicher gespeichert. Die Ereignisdaten umfassen dabei die Pufferdaten oder den Teil der Pufferdaten, der die Nutzgröße aus dem Vorlaufzeitraum repräsentiert. Außerdem repräsentieren die Ereignisdaten die Nutzgröße zum Zeitpunkt des Ereignisses, also zum Ereigniszeitpunkt sowie die Nutzgröße während des Aufzeichnungszeitraums unmittelbar nach dem Ereigniszeitpunkt. In der Folge ist es möglich, dass die Ereignisdaten die Nutzgröße vor, während und nach dem erkannten Ereignis repräsentieren. Die Ereignisdaten erlauben deshalb eine besonders vorteilhafte und präzise Auswertung des Ereignisses.

Eine vorteilhafte Ausgestaltung des Systems zeichnet sich dadurch aus, dass das System eine erste Vorrichtung aufweist, die den Schallsensor, die Prozessoreinheit und den Datenspeicher umfasst, und wobei das System eine zweite Vorrichtung aufweist, die den Nutzsensor umfasst, wobei die erste und zweite Vorrichtung über eine kabellose oder kabelgebundene Signalverbindung gekoppelt sind, um über diese Signalverbindung das Nutzsignal von dem Nutzsensor an die Prozessoreinheit zu übertragen. Die zweite Vorrichtung ist vorzugsweise getrennt von der ersten Vorrichtung ausgebildet. Die zweite Vorrichtung kann beispielsweise an der (dritten) Vorrichtung befestigt sein, um eine auf die dritte Vorrichtung wirkende Nutzgröße zu erfassen. Mit anderen Worten kann die dritte Vorrichtung beispielsweise die eingangs genannte Vorrichtung sein, wie beispielsweise ein Golfschläger, eine Transportvorrichtung, ein Teil eines Fahrzeugs oder eine anders gestaltete Vorrichtung. Indem die zweite Vorrichtung von der ersten Vorrichtung getrennt ist, kann die zweite Vorrichtung ein besonders geringes Gewicht aufweisen. Dies gilt insbesondere, wenn die zweite Vorrichtung im Wesentlichen durch das Gewicht des Nutzsensors geprägt ist. Die erste Vorrichtung hingegen kann getrennt und entfernt von der zweiten Vorrichtung angeordnet sein. Es ist jedoch bevorzugt vorgesehen, dass die erste Vorrichtung derart zu der zweiten Vorrichtung angeordnet ist, so dass der Schallsensor der ersten Vorrichtung in dem Sensorabstand zu dem Nutzsensor der zweiten Vorrichtung angeordnet ist, so dass der Sensorabstand kleiner als der vorbestimmte Maximalabstand, insbesondere von maximal 10 Metern, ist. Die erste Vorrichtung kann ein Gehäuse aufweisen, wobei die Prozessoreinheit der Datenspeicher in dem Gehäuse angeordnet sind und wobei der Schallsensor an der Außenseite des Gehäuses angebracht ist oder zumindest teilweise durch die Wand des Gehäuses hindurchfasst. Alternativ ist es möglich, dass das Gehäuse eine Öffnung aufweist, hinter der der Schallsensor innenseitig in dem Gehäuse angeordnet ist, so dass der Luftschall von dem Schallsensor innerhalb des Gehäuses der ersten Vorrichtung erfassbar ist.

Eine vorteilhafte Ausgestaltung des Systems zeichnet sich dadurch aus, dass das System eine Kommunikationsschnittstelle aufweist, die zum kabelgebundenen und/oder kabellosen Übertragen eines Ereignissignals ausgebildet ist, das die Ereignisdaten repräsentiert. Die Kommunikationsschnittstelle kann beispielsweise eine Funkschnittstelle sein. So kann diese beispielsweise als eine Bluetooth-Schnittstelle oder eine WLAN-Schnittstelle ausgebildet sein. Über die kabellose Funkschnittstelle kann das Ereignissignal kabellos übertragen werden. Somit können die Ereignisdaten weiteren Vorrichtungen und/oder Systemen zur Verfügung gestellt werden, um dort die Auswertung der Ereignisdaten vornehmen zu können.

Eine vorteilhafte Ausgestaltung des Systems zeichnet sich dadurch aus, dass die erste Vorrichtung die Kommunikationsschnittstelle umfasst. Die Kommunikationsschnittstelle ist vorzugsweise zumindest teilweise in einem Gehäuse der ersten Vorrichtung angeordnet. Weiter ist es bevorzugt vorgesehen, dass die Kommunikationsschnittstelle mit der Prozessoreinheit derart gekoppelt ist, so dass die Prozessoreinheit die Kommunikationsschnittstelle steuern kann. Die Prozessoreinheit kann konfiguriert sein, das Ereignissignal, das die Ereignisdaten repräsentiert, mittels der Kommunikationsschnittstelle zu übertragen.

Eine vorteilhafte Ausgestaltung des Systems zeichnet sich dadurch aus, dass das System einen Bildschirm aufweist. Außerdem ist die Prozessoreinheit bevorzugt dazu konfiguriert, den Bildschirm direkt oder indirekt derart zu steuern, so dass der Bildschirm sämtliche oder einen Teil der Ereignisdaten durch eine Nutzsignalkurve optisch darstellt. Dadurch kann eine optische Auswertung des Ereignisses erfolgen. Die Ereigniskurve repräsentiert die Ereignisdaten dabei abgebildet über die Zeit. Mit anderen Worten werden die Werte der Nutzdaten, die durch die Ereignisdaten repräsentiert sind, über die Zeit als die Nutzsignalkurve aufgetragen.

Eine vorteilhafte Ausgestaltung des Systems zeichnet sich dadurch aus, dass die erste Vorrichtung den Bildschirm aufweist. So kann der Bildschirm beispielsweise an einer Außenseite eines Gehäuses der ersten Vorrichtung angeordnet sein. Außerdem ist es bevorzugt vorgesehen, dass der Bildschirm mit der Prozessoreinheit gekoppelt ist, so dass die Prozessoreinheit den Bildschirm direkt oder indirekt steuern kann. Wird auf dem Bildschirm die Nutzsignalkurve dargestellt, so kann durch die erste Vorrichtung in unmittelbarer Nähe zum Ereignis eine optische Auswertung vorgenommen werden.

Eine vorteilhafte Ausgestaltung des Systems zeichnet sich dadurch aus, dass die erste Vorrichtung von einem Mobiltelefon gebildet ist oder als ein Mobiltelefon ausgestaltet ist. Das Mobiltelefon weist ein Mikrofon auf, das als Schallsensor zur fortlaufenden Erfassung des Luftschalls ausgebildet ist. Das Mobiltelefon weist außerdem einen Datenspeicher und eine Prozessoreinheit auf. Darüber hinaus weist das Mobiltelefon oftmals einen Bildschirm auf. Ist die Prozessoreinheit des Mobiltelefons darüber hinaus derart konfiguriert, wie es für das System vorgesehen ist, kann das Mobiltelefon eine Doppelfunktion erfüllen. Einerseits kann das Mobiltelefon dazu ausgebildet sein, um Telefonate zu führen. Andererseits kann das Mobiltelefon den gewünschten Zweck des Systems zumindest unterstützen. Das Mobiltelefon kann eine Bluetooth-Kommunikationseinheit aufweisen. Die zweite Vorrichtung, die den Nutzsensor umfasst, kann eine weitere Bluetooth-Kommunikationseinheit aufweisen. Die beiden Bluetooth-Kommunikationseinheiten können zur kabellosen Übertragung des Ereignissignals ausgebildet sein.

Eine vorteilhafte Ausgestaltung des Systems zeichnet sich dadurch aus, dass die zweite Vorrichtung ausgebildet ist, um fest an einem Gegenstand befestigt zu werden, insbesondere an dem Gegenstand angeklebt, angeschraubt oder festgeschraubt zu werden. Der Gegenstand kann von der zuvor erläuterten, dritten Vorrichtung gebildet sein oder diese umfassen. Der Gegenstand kann beispielsweise ein Teil einer Maschine oder ein anderer Gegenstand sein. So kann der Gegenstand beispielsweise ein Kleidungsstück wie ein Schuh oder ein Golfschläger sein. Durch die feste Befestigung der zweiten Vorrichtung an dem Gegenstand ist es möglich, dass als Nutzgröße beispielsweise eine Beschleunigung des Gegenstands, eine Geschwindigkeit des Gegenstands, ein zurückgelegter Weg des Gegenstands, eine auf den Gegenstand wirkende Kraft, ein auf den Gegenstand wirkender Druck oder eine Temperatur des Gegenstands ist. Der Druck ist vorzugsweise ein mechanischer Druck oder ein hydrostatischer Druck.

Eine vorteilhafte Ausgestaltung des Systems zeichnet sich dadurch aus, dass das System einen Schuh aufweist, wobei der Nutzsensor oder die zweite Vorrichtung an der Sohle des Schuhs befestigt oder in die Sohle des Schuhs eingebettet ist. Dadurch ist es möglich, dass von dem Nutzsensor als Nutzgröße beispielsweise die auf die Sohle des Schuhs wirkende Kraft, die auf die Sohle des Schuhs wirkende Beschleunigung oder der auf die Sohle des Schuhs wirkende, mechanische Druck erfasst wird. Wird der von einer Person tragende Schuh dazu verwendet, um beispielsweise einen Fußball zu treten, tritt bei dem Zusammenstoß zwischen dem Schuh und dem Fußball ein charakteristisches Geräusch auf, das beispielsweise das vorbestimmte Schallmuster bildet. Das Treten des Fußballs mit dem Schuh ist sodann das Ereignis. Um die Konstruktion des Schuhs und/oder des Fußballs zu verbessern, beispielsweise in der Art, dass der Fußball eine möglichst vorbestimmte Flugbahn einnimmt, können die Ereignisdaten dazu verwendet werden, um die Konstruktion des Schuhs und/oder des Fußballs derart zu verändern, dass die gewünschte Flugbahn bei einem vergleichbaren Stoß des Fußballs durch den Schuh eintritt.

Eine vorteilhafte Ausgestaltung des Systems zeichnet sich dadurch aus, dass das vorbestimmte Schallmuster einem Schall entspricht, der durch den Schlag eines Golfschlägers auf einen Golfball entsteht. Die zweite Vorrichtung kann dabei an dem Golfschläger befestigt sein und/oder in einem Schacht des Golfschlägers zumindest teilweise eingesetzt und/oder dort integriert sein. Wird von dem Schallsensor des Systems in dem fortlaufend erfassten Luftschall das Schallmuster erkannt, das dem Schlag des Golfschlägers auf einen Golfball entspricht, so werden die Ereignisdaten die Ereignisgröße während des Schlags des Golfschlägers auf den Ball, während des Aufzeichnungszeitraumes danach und vorzugsweise auch während des Vorlaufzeitraums vor dem Ereignis des Schlags des Golfschlägers auf den Ball repräsentieren. Die Ereignisdaten können deshalb dazu verwendet werden, um die Konstruktion des Golfschlägers und/oder des Balls derart zu verbessern, dass ein vorbestimmter Schlag des Golfschlägers auf den Golfball eine gewünschte Flugbahn des Golfballs verursacht.

Eine vorteilhafte Ausgestaltung des Systems zeichnet sich dadurch aus, dass das System einen Riemen aufweist, wobei der Nutzsensor oder die zweite Vorrichtung an dem Riemen befestigt oder in den Riemen eingebettet ist. Das vorbestimmte Schallmuster kann in diesem Fall einen Schall repräsentieren, der ein Zerreißen des Riemens repräsentiert. Wird ein entsprechendes Schallmuster in dem fortlaufend erfassten Luftschall erkannt, können die entsprechenden Ereignisdaten dazu verwendet werden, die Ursache des Aufreißens des Riemens festzustellen. Dies gilt insbesondere dann, wenn von dem Nutzsensor die auf den Riemen wirkende Kraft, eine auf den Riemen wirkende Zugspannung, eine Geschwindigkeit des Riemens und/oder eine Beschleunigung des Riemens repräsentiert.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine erste vorteilhafte Ausgestaltung des Systems in einer schematischen Darstellung zusammen mit einem Golfschläger.
- Figur 2: zeigt einen beispielhaften Signalverlauf des Nutzsignals.
- Figur 3: zeigt einen beispielhaften Signalverlauf des Schallsignals.
- Figur 4: zeigt eine vorteilhafte Ausgestaltung eines vorbestimmten Referenzmusters.
- Figur 5: zeigt eine vorteilhafte Ausgestaltung eines vorbestimmten Schallmusters.
- Figur 6: zeigt eine zweite vorteilhafte Ausgestaltung des Systems zusammen mit einer Fördervorrichtung.
- Figur 7: zeigt eine dritte vorteilhafte Ausgestaltung des Systems zusammen mit einem Schuh.

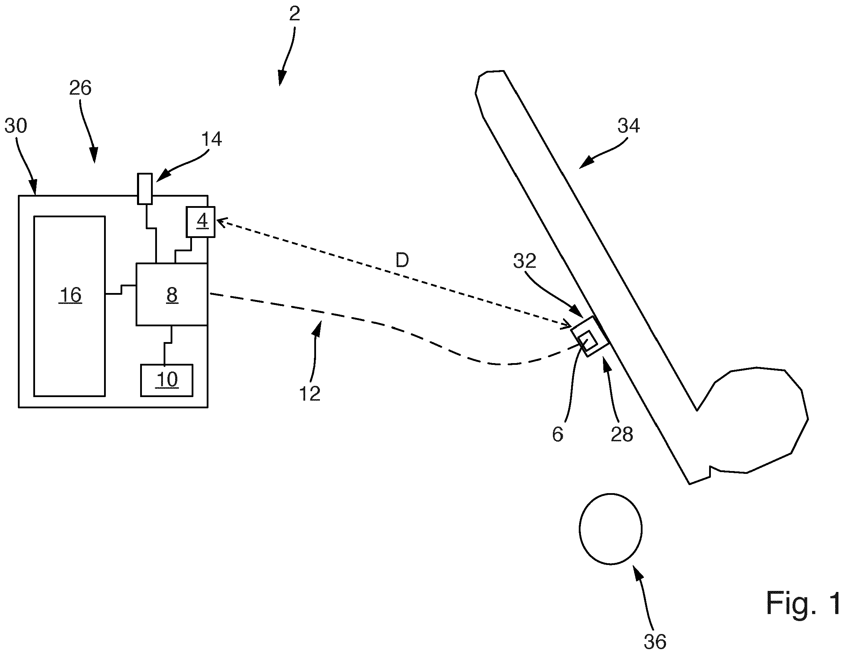

In der Figur 1 ist eine erste vorteilhafte Ausgestaltung des Systems 2 schematisch dargestellt. Das System 2 weist einen Schallsensor 4, einen Nutzsensor 6, eine Prozessoreinheit 8 und einen Datenspeicher 10 auf.

Der Schallsensor 4 ist beabstandet zu dem Nutzsensor 6 angeordnet. Vorzugsweise weist das System 2 eine erste Vorrichtung 26 auf, die ein Gehäuse 30 umfasst, wobei der Schallsensor 4 an einer Außenseite des Gehäuses 30 angeordnet ist oder innenseitig zu der Außenseite des Gehäuses 30 angeordnet ist, wobei eine Durchlassbohrung in der Außenwand des Gehäuses 30 derart vorgesehen ist, dass Luftschall durch diese Durchlassbohrung zu dem Schallsensor 4 gelangen kann. Außerdem ist es bevorzugt vorgesehen, dass die Prozessoreinheit 8 und der Datenspeicher 10 innerhalb des Gehäuses 30 angeordnet und dort direkt und indirekt an dem Gehäuse 30 befestigt sind.

Der Nutzsensor 6 ist direkt oder indirekt an einer weiteren Vorrichtung oder einem Gegenstand befestigbar. Wie aus der Figur 1 beispielhaft zu entnehmen ist, ist der Nutzsensor 6 in dem gezeigten Beispiel in einem weiteren, zweiten Gehäuse 32 in der zweiten Vorrichtung 28 angeordnet und an dem zweiten Gehäuse 32 direkt oder indirekt befestigt. Das Gehäuse 32 ist wiederum an dem Schaft eines Golfschlägers 34 befestigt. Der Golfschläger kann ein Teil des Systems 2 bilden.

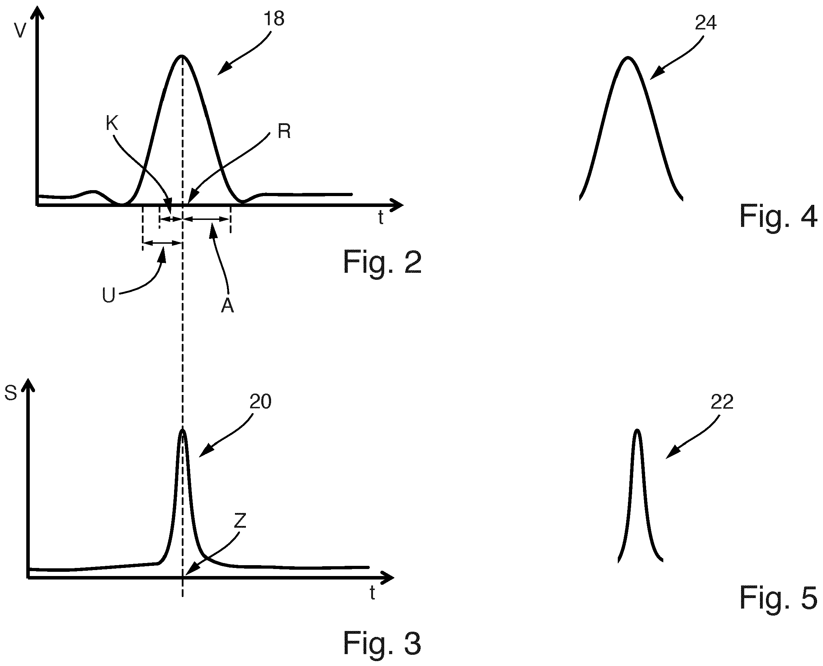

Der Nutzsensor 6 ist zur fortlaufenden Erfassung einer Nutzgröße ausgebildet. Unter einer fortlaufenden Erfassung der Nutzgröße wird vorzugsweise eine periodische Erfassung der Nutzgröße mit einer vorbestimmten Abtastfrequenz verstanden. Die vorbestimmte Abtastfrequenz kann beispielsweise mindestens 10 Hz, mindestens 20 Hz, mindestens 50 Hz oder mindestens 100 Hz betragen. Die Abtastfrequenz kann aber auch einen anderen geeigneten Wert betragen, der beispielswiese für die Aufzeichnung von Messdaten üblich ist. Grundsätzlich kann die Nutzgröße eine beliebige mechanische, elektrische oder andere physikalische Größe sein. Besonders bevorzugt ist die Nutzgröße entweder eine Beschleunigung, eine Geschwindigkeit, ein Weg, eine Kraft, ein mechanischer Druck, ein hydrostatischer Druck, ein Volumenstrom oder eine Temperatur. Bei dem in Figur 1 gezeigten Beispiel ist der Nutzsensor 6 beispielsweise zur fortlaufenden Erfassung einer Geschwindigkeit als Nutzgröße ausgebildet. Wird mit dem Golfschläger 34 ein Schwung ausgeführt, um den Golfball 36 zu schlagen, erfasst der Nutzsensor 6 eine Geschwindigkeit, die zunächst ansteigt und daraufhin wieder abfällt. Ein beispielhafter Signalverlauf 18 der als Nutzgröße erfassten Geschwindigkeit V ist in Figur 2 über die Zeit t aufgetragen.

Der Schallsensor 4 des Systems 2 ist zur fortlaufenden Erfassung von Luftschall ausgebildet. Beim Ausführen der Schlagbewegung mit dem Golfschläger 34 trifft das untere Ende des Golfschlägers 34 auf den Golfball 36, was ein Aufschlaggeräusch verursacht. Der Verlauf des entsprechenden Schallpegels S des von dem Schallsensor 4 fortlaufend erfassten Luftschall ist beispielhaft in der Figur 3 dargestellt.

Der Schallsensor 4 ist zur Erzeugung eines Schallsignals ausgebildet, das den von dem Schallsensor 4 erfassten Luftschall fortlaufend repräsentiert. Außerdem ist der Schallsensor 4 zur Übertragung des Schallsignals an die Prozessoreinheit 8 ausgebildet. Dazu kann eine Signalverbindung zwischen dem Schallsensor 4 und der Prozessoreinheit 8 vorgesehen sein, über die die Übertragung des Schallsignals von dem Schallsensor 4 an die Prozessoreinheit 8 erfolgen kann. Ein beispielhafter Signalverlauf 20 des Schallsignals ist in Figur 3 als der Schallpegel S über die Zeit t aufgetragen.

Die Prozessoreinheit 8 ist dazu konfiguriert, basierend auf dem Schallsignal ein vorbestimmtes Schallmuster 22 in dem fortlaufend erfassten Luftschall zu erkennen. In der Figur 5 ist ein beispielhafter Verlauf eines vorbestimmten Schallmusters 22 schematisch dargestellt. Die Prozessoreinheit 8 ist dazu konfiguriert, das in Figur 5 beispielhaft dargestellte und vorbestimmte Schallmuster 22 in dem Signalverlauf 20 des Schallsignals zu erkennen. Aus dem Stand der Technik sind entsprechende Methoden zur Musterkennung bekannt. Die Prozessoreinheit 8 kann zur Mustererkennung eines vorbestimmten Musters in einem Signal ausgebildet sein. Dies kann die Prozessoreinheit 8 zur Erkennung des vorbestimmten Schallmusters 22 in dem Schallsignal anwenden. Außerdem ist die Prozessoreinheit 8 dazu konfiguriert, bei einem positiv erkannten Schallmuster 22 einen Ereigniszeitpunkt Z des Auftretens des Schallmusters 22 in den Luftschall zu bestimmen. Der Ereigniszeitpunkt Z ist vorzugsweise der mittlere Zeitpunkt zwischen dem Anfang des Auftretens des Schallmusters 22 und dem Ende des Auftretens des Schallmusters 22.

In Bezug auf die ausgeführte Schwungbewegung des Golfschlägers 34 und dem Schlag auf den Ball 36 repräsentiert der Ereigniszeitpunkt Z den Zeitpunkt, bei dem der Golfschläger 34 auf den Golfball 36 trifft. Hier ist der Signalpegel S deutlich größer als im übrigen Zeitbereich.

Um den Ablauf der Schwungbewegung des Golfschlägers 34 und/oder um konstruktive Ausgestaltungen des Golfschlägers 34 und/oder des Golfballs 36 gezielt analysieren zu können, hat es sich in der Praxis als vorteilhaft herausgestellt, wenn das Nutzsignal zum Zeitpunkt des Auftreffens des Golfschlägers 34 auf den Golfball 36 sowie in einem daran anschließenden Aufzeichnungszeitraum A gespeichert und sodann ausgewertet werden kann.

Der Nutzsensor 6 ist zur Erzeugung eines Nutzsignals ausgebildet, das die Nutzgröße fortlaufend repräsentiert. Bei dem in Figur 1 dargestellten Beispiel ist das Nutzsignal vorzugsweise die Geschwindigkeit V an dem Nutzsensor 6 und damit auch die Geschwindigkeit V an einem Punkt des Schaftes des Golfschlägers 34. Der Nutzsensor 6 ist außerdem zur Übertragung des Nutzsignals an die Prozessoreinheit 8 ausgebildet. Das System 2 kann derart ausgebildet sein, so dass eine kabellose Nutzsignalverbindung 12 direkt oder indirekt zwischen dem Nutzsensor 6 und der Prozessoreinheit 8 ausgebildet ist, so dass ein Nutzsignal von dem Nutzsensor 6 an die Prozessoreinheit 8 übertragbar ist. Der Nutzsensor 6 ist vorzugsweise zur direkten Übertragung des Nutzsignals, das die zuvor erfasste Nutzgröße repräsentiert, an die Prozessoreinheit 8 ausgebildet.

Die fortlaufende Speicherung von Daten, die die fortlaufend erfasste Nutzgröße repräsentieren, ist praktisch nicht umsetzbar. Der Datenspeicher 10 hat nämlich eine begrenzte Speicherkapazität. Es ist deshalb wünschenswert, dass die Prozessoreinheit 8 konfiguriert ist, Ereignisdaten im Datenspeicher 10 zu speichern, die die zum Ereigniszeitpunkt Z erfasste Nutzgröße und die während eines vorbestimmten Aufzeichnungszeitraums A unmittelbar nach dem Ereigniszeitpunkt Z erfasste Nutzgröße repräsentiert. Der Ereigniszeitpunkt Z wurde zuvor mittels des Schallmusters festgestellt. Es ist deshalb mittels der Prozessoreinheit 8 möglich, die Werte der Nutzgröße zum Ereigniszeitpunkt Z sowie die Werte der Nutzgröße im Aufzeichnungszeitraum A aus dem Nutzsignal zu extrahieren und die entsprechenden Werte der Nutzgröße durch die Ereignisdaten im Datenspeicher 10 zu speichern.

Die Ereignisdaten haben eine beschränkte Datengröße, so dass sie auch tatsächlich von dem Datenspeicher 10 gespeichert werden können. Auch mehrere Ereignisse können oftmals von dem gleichen Datenspeicher 10 durch entsprechende Ereignisdaten gespeichert werden. Darüber hinaus repräsentieren die Ereignisdaten besonders wichtige Daten, die zur Auswertung der Nutzgröße im Zusammenhang mit dem Ereignis von besonderer Relevanz sind.

Als besonders vorteilhaft hat es sich herausgestellt, wenn das System 2 einen Bildschirm 16 aufweist. Dieser Bildschirm 16 kann einen Teil der ersten Vorrichtung 26 bilden. So kann der Bildschirm 16 beispielsweise an der Außenseite des Gehäuses 30 befestigt sein oder in die Außenseite des Gehäuses 30 integriert sein. Die Prozessoreinheit 8 kann dazu konfiguriert sein, den Bildschirm 16 direkt oder indirekt derart zu steuern, so dass der Bildschirm 16 sämtliche oder einen Teil der Ereignisdaten optisch darstellt. So kann die Prozessoreinheit 8 den Bildschirm 16 beispielsweise direkt oder indirekt derart steuern, so dass die genannten Ereignisdaten durch eine Nutzsignalkurve optisch dargestellt werden. Damit ist eine optische Auswertung möglich.

Als besonders vorteilhaft hat es sich außerdem herausgestellt, wenn die erste Vorrichtung 26 als ein Mobiltelefon ausgestaltet ist oder von einem Mobiltelefon gebildet ist. Das Mobiltelefon bietet den Vorteil, dass dieses bereits ein Mikrofon aufweist, was den Schallsensor 4 bilden kann. Das Mobiltelefon weist außerdem eine Prozessoreinheit 8 sowie einen Datenspeicher 10 und einen Bildschirm 16 auf. Die Prozessoreinheit 8 des Mobiltelefons ist dazu konfiguriert, um mittels einer zugehörigen Kommunikationseinheit 14 eine kabellose Funkverbindung aufzubauen. Über diese Funkverbindung können Telekommunikationsdaten ausgetauscht werden, um Telefonate mit dem Mobiltelefon auszuführen. Die Prozessoreinheit 8 des Mobiltelefons kann aber auch die Konfiguration des zuvor erläuterten Systems 2 umfassen, so dass die Vorteile des Systems 2 auch mit einem Mobiltelefon und den weiteren Teilen des Systems 2 erreicht werden können.

Wie aus der Figur 1 beispielhaft zu entnehmen ist, ist es bevorzugt vorgesehen, dass der Nutzsensor 6 bzw. die erste Vorrichtung 26 von den weiteren Teilen des Systems 2, insbesondere von dem Schallsensor 4 und/oder der ersten Vorrichtung 26 mechanisch getrennt oder separat angeordnet ist. Es ist jedoch bevorzugt vorgesehen, dass der Schallsensor 4 in einem Sensorabstand D zu dem Nutzsensor 6 angeordnet ist, wobei der Sensorabstand D kleiner als ein vorbestimmter Maximalabstand ist. Der Maximalabstand ist vorzugsweise derart gewählt, so dass der von dem Schallsensor 4 fortlaufend erfasste Luftschall in funktionaler Beziehung und/oder in Korrelation zu der von dem Nutzsensor 6 fortlaufend erfassten Nutzgröße ist. Bei praktischen Untersuchungen wurde festgestellt, dass ein vorbestimmter Maximalabstand von maximal 10 m geeignet ist.

Aus der Figur 2 ist der beispielhafte Signalverlauf 18 des Nutzsignals zu entnehmen. Aus dem Signalverlauf 18 ist zu erkennen, dass dieser zu einem Referenzzeitpunkt R ein Maximum aufweist, wobei die Geschwindigkeit V vor dem Referenzzeitpunkt R stark ansteigt und danach wieder schnell abfällt. In einem Idealfall stimmen der Referenzzeitpunkt R und der Ereigniszeitpunkt Z aus Figur 3 überein. Daraus resultiert, dass aus dem Signalverlauf 18 des Nutzsignals ebenfalls ein Zeitpunkt, nämlich der Referenzzeitpunkt R, für das Auftreten des Ereignisses entnehmbar ist. Es ist deshalb vorgesehen, dass die Prozessoreinheit 8 dazu konfiguriert ist, basierend auf dem Nutzsignal ein vorbestimmtes Referenzmuster 24, wie es beispielhaft in Figur 4 dargestellt ist, in der fortlaufend erfassten Nutzgröße zu erkennen und bei einem positiv erkannten Referenzmuster 24 einen Referenzzeitpunkt R des auftretenden Referenzmusters 24 zu bestimmen. Ob die Ereignisdaten im Datenspeicher 10 gespeichert werden oder nicht, kann davon abhängig gemacht werden, ob der Referenzzeitpunkt R und der Ereigniszeitpunkt Z gleich sind oder allenfalls einen Zeitabstand zueinander aufweisen, der kleiner als ein vorbestimmter Schwellwert ist. Es ist deshalb bevorzugt vorgesehen, dass die Prozessoreinheit 8 dazu konfiguriert ist, die Ereignisdaten nur dann im Datenspeicher 10 zu speichern, wenn ein Zeitabstand zwischen dem Ereigniszeitpunkt Z und dem Referenzzeitpunkt R kleiner als ein vorbestimmter Schwellwert, insbesondere kleiner als 0,5 Sekunden, ist. Der Schwellwert kann also beispielsweise 0,5 Sekunden sein. In diesem Fall wird davon ausgegangen, dass das Schallmuster 22 und das Referenzmuster 24 mittels der Prozessoreinheit erkannt werden und dadurch eine redundante Erkennung des Ereignisses zum Ereigniszeitpunkt Z bzw. Referenzzeitpunkt R erfolgt. Durch die redundante Erkennung der Muster kann eine fehlerhafte Speicherung der Ereignisdaten im Datenspeicher 10 verhindert werden. Vielmehr findet die Speicherung der Ereignisdaten im Datenspeicher 10 nur dann statt, wenn die redundante Erkennung der beiden Muster 22, 24 dies belegt.

Schlägt der in Figur 1 beispielhaft dargestellte Golfschläger 34 auf den Golfball 36, kann dieses Aufschlagen des Golfschlägers 34 auf den Golfball 36 als ein Ereignis aufgefasst werden. Der Zeitpunkt dieses Ereignisses ist als Ereigniszeitpunkt Z in Figur 3 und als Referenzzeitpunkt R in Figur 2 markiert. Der Wert der Nutzgröße zum Ereigniszeitpunkt Z bzw. Referenzzeitpunkt R sowie die Werte der Nutzgröße im Aufzeichnungszeitraum A im Anschluss an den Ereigniszeitpunkt Z bzw. den Referenzzeitpunkt R können für die Analyse besonders wichtig sein. In der Praxis wurde jedoch auch festgestellt, dass die Werte des Nutzsignals bereits vor dem Ereigniszeitpunkt Z bzw. dem Referenzzeitpunkt R von Interesse sein können. Es ist deshalb wünschenswert, wenn die Ereignisdaten die Werte der Nutzgröße während des Ereignisses sowie aus dem nachfolgenden Aufzeichnungsraum A und dem vorhergehenden Vorlaufzeitraum K repräsentieren. Wann das Ereignis tatsächlich stattfindet, ist jedoch selten vorhersagbar und unterliegt einer gewissen Zufälligkeit. Um auf die Werte der Nutzdaten vor dem Ereigniszeitpunkt Z bzw. Referenzzeitpunkt R zugreifen zu können, ist es bevorzugt vorgesehen, dass die Werte der erfassten Nutzgröße aus einem Pufferzeitraum U zwischengespeichert werden, wobei der Pufferzeitraum U fortlaufend mit der aktuellen Zeit t mitbewegt wird. Mit fortschreitender Zeit werden also fortlaufend neue Werte der Nutzgröße aus dem Pufferzeitraum U zwischengespeichert, wohingegen Werte der Nutzgröße, die aus dem Pufferzeitraum U herausfallen, nicht mehr zwischengespeichert werden.

Es ist deshalb bevorzugt vorgesehen, dass die Prozessoreinheit 8 konfiguriert ist, die jeweils aktuell erfasste Nutzgröße durch Pufferdaten in dem Datenspeicher 10 zu speichern. Außerdem ist die Prozessoreinheit 8 bevorzugt dazu konfiguriert, die Pufferdaten fortlaufend derart zu aktualisieren, dass die Pufferdaten immer nur die zum aktuellen Zeitpunkt erfasste Nutzgröße und die aus dem vorbestimmten Pufferzeitraum U unmittelbar vor dem aktuellen Zeitpunkt erfasste Nutzgröße repräsentiert. Darüber hinaus ist es bevorzugt vorgesehen, dass die Prozessoreinheit 8 dazu konfiguriert ist, die Ereignisdaten im Datenspeicher 10 derart zu speichern, dass die Ereignisdaten nur die zum Ereigniszeitpunkt Z erfasste Nutzgröße, die aus einem vorbestimmten Vorlaufzeitraum K unmittelbar vor dem Ereigniszeitpunkt Z erfasste Nutzgröße und die während eines vorbestimmten Aufzeichnungszeitraums A unmittelbar nach dem Ereigniszeitpunkt Z erfasste Nutzgröße repräsentiert, wobei die Vorlaufzeit kleiner oder gleich dem Pufferzeitraum U ist. Die Pufferdaten repräsentieren die Werte der Nutzgröße aus dem Pufferzeitraum U, der mit fortlaufender Zeit t mitläuft und dadurch auch eine Aktualisierung der Pufferdaten notwendig ist. Da der Vorlaufzeitraum kleiner als der Pufferzeitraum U oder gleich dem Pufferzeitraum U ist, können die Werte der Nutzgröße, die in dem Vorlaufzeitraum K bereits erfasst worden sind, mit den Werten der Nutzgröße kombiniert werden, die zum aktuellen Zeitpunkt und im Aufzeichnungszeitraum A aufgezeichnet werden. Die sich daraus ergebenden Ereignisdaten werden in dem Datenspeicher 10 gespeichert und können somit verwendet werden, um eine besonders präzise Analyse des Ereignisses auszuführen.

Um die Ergebnisdaten auch anderen Vorrichtungen und/oder Systemen zur Verfügung zu stellen, ist es bevorzugt vorgesehen, dass das System 2 eine Kommunikationsschnittstelle 14 aufweist, die zum kabelgebundenen und/oder kabellosen Übertragen eines Ereignissignals ausgebildet ist, das die Ereignisdaten repräsentiert. Dadurch können die Ereignisdaten über die Kommunikationsschnittstelle 14 und das Ereignissignal an einen Empfänger übertragen werden, wo die Ereignisdaten analysiert werden können.

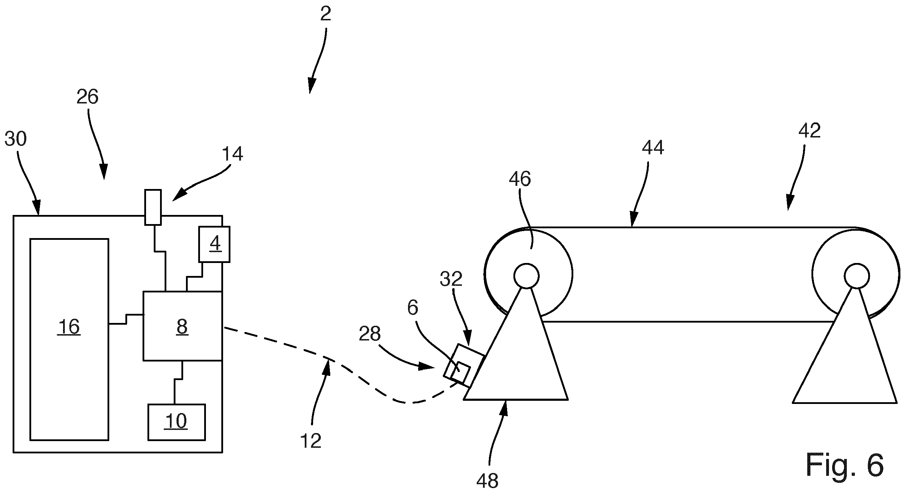

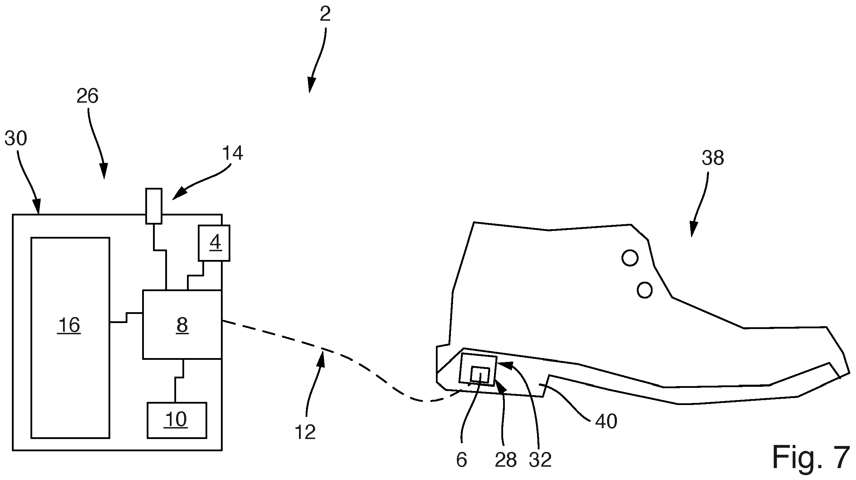

In den Figuren 6 und 7 sind weitere Anwendungsmöglichkeiten des Systems 2 schematisch dargestellt.

In der Figur 6 ist das System 2 in analoger Weise zu dem System 2 ausgebildet, wie es im Zusammenhang mit den Figuren 1 bis 5 bereits erläutert worden ist. Allerdings ist der Nutzsensor 6 mittels des Gehäuses 30 an einem Gestell 48 einer Fördervorrichtung 42 befestigt. Die Fördervorrichtung 42 kann einen Teil des Systems 2 bilden. Die Fördervorrichtung 42 weist zwei Umlenkrollen 46 auf, die jeweils an einem Gestell 48 drehbar gelagert befestigt sind. Die Fördervorrichtung 42 weist außerdem einen Riemen 44 auf, der jede der beiden Umlenkrollen 46 teilweise umschlingt, so dass mittels des Riemens 44 ein Fördergut abgebildet ist. Der Riemen 44 kann auch als ein Fördergurt oder als ein Förderband bezeichnet sein. Die Anordnung des Nutzsensors 6 ist ebenfalls nur beispielhaft dargestellt. Grundsätzlich kann der Nutzsensor 6 auch in einer anderen Stelle der Fördervorrichtung 42 befestigt sein.

Bei der Ausgestaltung aus Figur 6 kann der Nutzsensor 6 zur Erfassung der auf das Gestell 48 wirkenden Kraft oder mechanischen Spannung ausgebildet sein. Die Kraft bzw. Spannung kann sodann die Nutzgröße bilden. Die Belastung des Riemens 44 durch Fördergut verursacht eine entsprechend höhere Kraft oder mechanische Spannung auf das Gestell 48, wobei die Kraft bzw. mechanische Spannung von dem Nutzsensor 6 erfasst sein kann. Kommt es zu einem Riss in dem Riemen 44, wird sich die Kraft bzw. die mechanische Spannung sehr schnell reduzieren. Der Riss des Riemens 44 geht außerdem mit einer akustischen Geräuschentwicklung einher, die von dem Schallsensor 4 des Systems 2 erfasst wird. In analoger Weise, wie es zuvor mit dem Golfschläger 34 und dem Golfball 36 erläutert worden ist, kann somit mittels des Systems 2 eine Analyse des Ereignisses, nämlich das Auftreten des Risses in dem Riemen 44, besonders präzise analysiert werden. Denn die Ereignisdaten repräsentieren die Kraft bzw. die mechanische Spannung, die auf das Gestell 48 wirkt, und zwar über einen Zeitraum, der den Ereigniszeitpunkt Z sowie den Aufzeichnungszeitraum A umfasst. Vorzugsweise repräsentieren die Ereignisdaten auch die Werte der Nutzgröße während des Vorlaufzeitraums K.

Eine weitere vorteilhafte Ausgestaltung des Systems 2 ist Figur 7 in Kombination mit einem Schuh 38 oder einer Sohle 40 des Schuhs 38 dargestellt. Die Sohle 40 kann eine fest mit dem Schuh 38 verbundene Sohle 40 sein. Die Sohle 40 kann alternative als eine Einlegsohle ausgebildet sein. Der Schuh 38 oder die Sohle 40 können einen Teil des Systems 2 bilden.

Der Nutzsensor 6 oder die zweite Vorrichtung 28 mit dem Nutzsensor 6 kann in die Sohle 40 eingebettet sein oder daran befestigt sein, um eine Kraft zu erfassen, die von dem Fuß des Trägers des Schuhs 38 an die Sohle 40 des Schuhs 38 übertragen wird. Läuft eine Person mit dem Schuh 40, so verursacht jedes Auftreten des Schuhs 38 auf einen Untergrund ein charakteristisches Aufsetzgeräusch, das als Ereignis aufgefasst werden kann. Analog zu den vorherigen Erläuterungen können deshalb Ereignisdaten erzeugt und gespeichert werden, die die auf die Sohle 40 wirkende Kraft während des Auftreten des Schuhs 38, während eines Aufzeichnungszeitraums A unmittelbar nach dem Auftreten des Schuhs 38 auf den Untergrund und vorzugsweise auch während einer Vorlaufzeit unmittelbar vor dem Auftreten des Schuhs 38 auf den Untergrund repräsentieren.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können, sofern die Kombinationen in den Geltungsbereich der im Anhang aufgeführten Ansprüche fallen.

Bezugszeichen in den Ansprüchen sind nicht als Einschränkung anzusehen.

### Bezugszeichenliste (Teil der Beschreibung)

- A: Aufzeichnungszeitraum
- D: Sensorabstand
- K: Vorlaufzeitraum
- R: Referenzzeitpunkt
- S: Schallpegel
- t: Zeit
- U: Pufferzeitraum
- V: Geschwindigkeit
- Z: Ereigniszeitpunkt

- 2: System
- 4: Schallsensor
- 6: Nutzsensor
- 8: Prozessoreinheit
- 10: Datenspeicher
- 12: Nutzsignalverbindung
- 14: Kommunikationsschnittstelle
- 16: Bildschirm
- 18: Signalverlauf des Nutzsignals
- 20: Signalverlauf des Schallsignals
- 22: vorbestimmtes Schallmuster
- 24: vorbestimmtes Referenzmuster
- 26: erste Vorrichtung
- 28: zweite Vorrichtung
- 30: erste Gehäuse
- 32: zweites Gehäuse
- 34: Golfschläger
- 36: Golfball
- 38: Schuh
- 40: Sohle
- 42: Fördervorrichtung
- 44: Riemen / Fördergurt
- 46: Umlenkrolle
- 48: Gestell

## Patentansprüche

1. System (2), aufweisend: einen Schallsensor (4) zur fortlaufenden Erfassung von Luftschall, einen Nutzsensor (6) zur fortlaufenden Erfassung einer Nutzgröße, eine Prozessoreinheit (8), und einen Datenspeicher (10), wobei die Nutzgröße eine Beschleunigung, eine Geschwindigkeit V, ein Weg, eine Kraft, ein Druck, ein Volumenstrom oder eine Temperatur ist, wobei der Schallsensor (4) zur Erzeugung eines Schallsignals, das den von dem Schallsensor (4) erfassten Luftschall fortlaufend repräsentiert, und zur Übertragung des Schallsignals an die Prozessoreinheit (8) ausgebildet ist, wobei der Nutzsensor (6) zur Erzeugung eines Nutzsignals, das die Nutzgröße fortlaufend repräsentiert, und zur Übertragung des Nutzsignals an die Prozessoreinheit (8) ausgebildet ist, wobei die Prozessoreinheit (8) konfiguriert ist, basierend auf dem Schallsignal ein vorbestimmtes Schallmuster (22), das für das Eintreten eines Ereignisses charakteristisch ist, in dem fortlaufend erfassten Luftschall zu erkennen und wobei das System dadurch charakterisiert ist, dass die Prozessoreinheit ferner konfiguriert ist, aus dem positiv erkannten Schallmuster (22) einen Ereigniszeitpunkt (Z) des Auftretens des Schallmusters (22) im Luftschall zu bestimmen, und wobei die Prozessoreinheit (8) konfiguriert ist, als Reaktion auf das Bestimmen des Ereigniszeitpunkts (Z) aus dem positiv erkannten Schallmuster (22) Ereignisdaten mit einer beschränkten Datengröße im Datenspeicher (10) zu speichern, die die zum Ereigniszeitpunkt (Z) erfasste Nutzgröße und die während eines vorbestimmten Aufzeichnungszeitraums (A) unmittelbar nach dem Ereigniszeitpunkt (Z) erfasste Nutzgröße repräsentiert.

2. System (2) nach dem vorhergehenden Anspruch, **dadurch gekennzeichnet, dass** der Schallsensor (4) in einem Sensorabstand (D) zu dem Nutzsensor (6) angeordnet ist, wobei der Sensorabstand (D) kleiner als ein vorbestimmter Maximalabstand, insbesondere von maximal 10 Metern, ist.

3. System (2) nach einem der vorhergehenden Ansprüche, **dadurch gekennzeichnet, dass** die Prozessoreinheit (8) konfiguriert ist, basierend auf dem Nutzsignal ein vorbestimmtes Referenzmuster (24) in der fortlaufend erfassten Nutzgröße zu erkennen und bei einem positiv erkannten Referenzmuster (24) einen Referenzzeitpunkt (R) des auftretenden Referenzmusters (24) zu bestimmen, wobei die Prozessoreinheit (8) konfiguriert ist, die Ereignisdaten nur dann im Datenspeicher (10) zu speichern, wenn ein Zeitabstand zwischen dem Ereigniszeitpunkt (Z) und dem Referenzzeitpunkt (R) kleiner als ein vorbestimmter Schwellwert, insbesondere 0,5 Sekunden, ist.

4. System (2) nach einem der vorhergehenden Ansprüche, **dadurch gekennzeichnet, dass** die Prozessoreinheit (8) konfiguriert ist, die jeweils aktuell erfasste Nutzgröße durch Pufferdaten in dem Datenspeicher (10) zu speichern, wobei die Prozessoreinheit (8) konfiguriert ist, die Pufferdaten fortlaufend derart zu aktualisieren, dass die Pufferdaten immer nur die zum aktuellen Zeitpunkt erfasste Nutzgröße und die aus einem vorbestimmten Pufferzeitraum (U) unmittelbar vor dem aktuellen Zeitpunkt erfassten Nutzgrößen repräsentieren, und wobei die Prozessoreinheit (8) konfiguriert ist, die Ereignisdaten im Datenspeicher (10) derart zu speichern, so dass die Ereignisdaten die zum Ereigniszeitpunkt (Z) erfasste Nutzgröße, die aus einem vorbestimmten Vorlaufzeitraum (K) unmittelbar vor dem Ereigniszeitpunkt (Z) erfasste Nutzgröße und die während eines vorbestimmten Aufzeichnungszeitraums (A) unmittelbar nach dem Ereigniszeitpunkt (Z) erfasste Nutzgröße repräsentieren, und wobei der Vorlaufzeitraum (K) kleiner oder gleich dem Pufferzeitraum (U) ist.

5. System (2) nach einem der vorhergehenden Ansprüche, **dadurch gekennzeichnet, dass** das System (2) eine erste Vorrichtung (26) aufweist, die den Schallsensor (4), die Prozessoreinheit (8) und den Datenspeicher (10) umfasst, und wobei das System (2) eine zweite Vorrichtung (28) aufweist, die den Nutzsensor (6) umfasst, wobei die erste und zweite Vorrichtung (26, 28) über eine kabellose oder kabelgebundene Nutzsignalverbindung (12) gekoppelt sind, um über diese Nutzsignalverbindung (12) das Nutzsignal von dem Nutzsensor (6) an die Prozessoreinheit (8) zu übertragen.

6. System (2) nach einem der vorhergehenden Ansprüche, **dadurch gekennzeichnet, dass** das System (2) eine Kommunikationsschnittstelle (14) aufweist, die zum kabelgebundenen und/oder kabellosen Übertragen eines Ereignissignals ausgebildet ist, das die Ereignisdaten repräsentiert.

7. System (2) nach den vorherigen Ansprüchen 5 und 6, **dadurch gekennzeichnet, dass** die erste Vorrichtung (26) die Kommunikationsschnittstelle (14) umfasst.

8. System (2) nach einem der vorhergehenden Ansprüche, **dadurch gekennzeichnet, dass** das System (2) einen Bildschirm (16) aufweist, wobei die Prozessoreinheit (8) konfiguriert ist, den Bildschirm (16) direkt oder indirekt derart zu steuern, so dass der Bildschirm (16) sämtliche oder einen Teil der Ereignisdaten durch eine Nutzsignalkurve optisch darstellt.

9. System (2) nach Anspruch 5 und Anspruch 8, **dadurch gekennzeichnet, dass** die erste Vorrichtung (26) den Bildschirm (16) umfasst.

10. System (2) nach Anspruch 5 und insbesondere einem der vorhergehenden Ansprüche 6 bis 9, **dadurch gekennzeichnet, dass** die erste Vorrichtung (26) als ein Mobiltelefon ausgestaltet ist.

11. System (2) nach Anspruch 5 und insbesondere einem der vorhergehenden Ansprüche 6 bis 10, **dadurch gekennzeichnet, dass** die zweite Vorrichtung (28) ausgebildet ist, um fest an einem Gegenstand befestigt zu werden, insbesondere an dem Gegenstand angeklebt, angeschraubt oder festgeklemmt zu werden.

12. System (2) nach einem der vorhergehenden Ansprüche, **dadurch gekennzeichnet, dass** das System (2) einen Schuh (38) aufweist, wobei der Nutzsensor (6) oder die zweite Vorrichtung (28) an der Sohle (40) des Schuhs (38) befestigt oder in die Sohle (40) des Schuhs (38) eingebettet ist.

13. System (2) nach einem der vorhergehenden Ansprüche, **dadurch gekennzeichnet, dass** das vorbestimmte Schallmuster einem Schall entspricht, der durch den Schlag eines Golfschlägers (34) auf einen Golfball (36) entsteht.

14. System (2) nach einem der vorhergehenden Ansprüche 1 bis 11, **dadurch gekennzeichnet, dass** das System (2) einen Riemen (44) aufweist, wobei der Nutzsensor (6) oder die zweite Vorrichtung (28) an dem Riemen (44) befestig oder in den Riemen (44) eingebettet ist.

## Claims

1. System (2) having: a sound sensor (4) for continuously capturing airborne sound, a service sensor (6) for continuously measuring a useful variable, a processor unit (8), and a data memory (10), wherein the useful variable is an acceleration, a velocity V, a distance, a force, a pressure, a volumetric flow or a temperature, wherein the sound sensor (4) is designed to generate a sound signal, which continuously represents the airborne sound captured by the sound sensor (4), and to transmit the sound signal to the processor unit (8), wherein the service sensor (6) is designed to generate a useful signal, which continuously represents the useful variable, and to transmit the useful signal to the processor unit (8), wherein the processor unit (8) is configured to take the sound signal as a basis for recognizing a predetermined sound pattern (22), which is characteristic of the occurrence of an event, in the continuously captured airborne sound and wherein the system is **characterized in that** the processor unit is further configured to determine, from the positively recognized sound pattern (22), an event time (Z) of the occurrence of the sound pattern (22) in the airborne sound, and wherein the processor unit (8) is configured to respond to the event time (Z) being determined from the positively recognized sound pattern (22) by storing event data having a limited data size in the data memory (10), which event data represent the useful variable measured at the event time (Z) and the useful variable measured during a predetermined recording period (A) immediately after the event time (Z).

2. System (2) according to the preceding claim, **characterized in that** the sound sensor (4) is arranged at a sensor distance (D) from the service sensor (6), wherein the sensor distance (D) is less than a predetermined maximum distance, in particular of no more than 10 metres.

3. System (2) according to one of the preceding claims, **characterized in that** the processor unit (8) is configured to take the useful signal as a basis for recognizing a predetermined reference pattern (24) in the continuously measured useful variable and, if a reference pattern (24) is positively recognized, to determine a reference time (R) of the occurring reference pattern (24), wherein the processor unit (8) is configured to store the event data in the data memory (10) only if a time interval between the event time (Z) and the reference time (R) is less than a predetermined threshold value, in particular 0.5 seconds.

4. System (2) according to one of the preceding claims, **characterized in that** the processor unit (8) is configured to store the useful variable currently measured at any one time in the data memory (10) using buffer data, wherein the processor unit (8) is configured to continuously update the buffer data in such a way that the buffer data always only represent the useful variable measured at the current time and the useful variables measured immediately before the current time from a predetermined buffer period (U), and wherein the processor unit (8) is configured to store the event data in the data memory (10) in such a way that the event data represent the useful variable measured at the event time (Z), the useful variable measured immediately before the event time (Z) from a predetermined lead-in period (K) and the useful variable measured during a predetermined recording period (A) immediately after the event time (Z), and wherein the lead-in period (K) is shorter than or equal to the buffer period (U).

5. System (2) according to one of the preceding claims, **characterized in that** the system (2) has a first apparatus (26) which comprises the sound sensor (4), the processor unit (8) and the data memory (10), and wherein the system (2) has a second apparatus (28) which comprises the service sensor (6), wherein the first and second apparatus (26, 28) are coupled by way of a wireless or wired useful signal connection (12) in order to transmit the useful signal from the service sensor (6) to the processor unit (8) by way of this useful signal connection (12).

6. System (2) according to one of the preceding claims, **characterized in that** the system (2) has a communication interface (14) designed to transmit an event signal, which represents the event data, in a wired and/or wireless manner.

7. System (2) according to preceding Claims 5 and 6, **characterized in that** the first apparatus (26) comprises the communication interface (14).

8. System (2) according to one of the preceding claims, **characterized in that** the system (2) has a screen (16), wherein the processor unit (8) is configured to directly or indirectly control the screen (16) in such a way that the screen (16) visually displays all or some of the event data in the form of a useful signal curve.

9. System (2) according to Claim 5 and Claim 8, **characterized in that** the first apparatus (26) comprises the screen (16).

10. System (2) according to Claim 5 and in particular one of preceding Claims 6 to 9, **characterized in that** the first apparatus (26) is in the form of a mobile phone.

11. System (2) according to Claim 5 and in particular one of preceding Claims 6 to 10, **characterized in that** the second apparatus (28) is designed to be permanently mounted on an object, in particular to be adhesively bonded, screwed or clamped to the object.

12. System (2) according to one of the preceding claims, **characterized in that** the system (2) has a shoe (38), wherein the service sensor (6) or the second apparatus (28) is mounted on the sole (40) of the shoe (38) or is embedded in the sole (40) of the shoe (38).

13. System (2) according to one of the preceding claims, **characterized in that** the predetermined sound pattern corresponds to a sound which arises when a golf club (34) hits a golf ball (36).

14. System (2) according to one of preceding Claims 1 to 11, **characterized in that** the system (2) has a belt (44), wherein the service sensor (6) or the second apparatus (28) is mounted on the belt (44) or is embedded in the belt (44).

## Revendications

1. Système (2), comprenant : un capteur acoustique (4) destiné à l'acquisition en continu de bruit aérien, un capteur d'utilité (6) destiné à l'acquisition en continu d'une grandeur utile, une unité à processeur (8) et une mémoire de données (10), la grandeur utile étant une accélération, une vitesse V, un trajet, une force, une pression, un débit volumique ou une température, le capteur acoustique (4) étant configuré pour générer un signal acoustique, qui représente en continu le bruit aérien acquis par le capteur acoustique (4), et pour transmettre le signal acoustique à l'unité à processeur (8), le capteur d'utilité (6) étant configuré pour générer un signal utile, qui représente continuellement la grandeur utile, et pour transmettre le signal utile à l'unité à processeur (8), l'unité à processeur (8) étant configurée pour, en se basant sur le signal acoustique, reconnaître dans le bruit aérien acquis en continu un modèle acoustique (22) prédéterminé, qui est caractéristique de la survenue d'un événement, et le système étant **caractérisé en ce que** l'unité à processeur est en outre configurée pour, à partir du modèle acoustique (22) reconnu positivement, déterminer un instant d'événement (Z) de la survenue du modèle acoustique (22) dans le bruit aérien, et l'unité à processeur (8) étant configurée pour, en réaction à la détermination de l'instant d'événement (Z) à partir du modèle acoustique (22) reconnu positivement, mémoriser dans la mémoire de données (10) les données d'événement ayant une grandeur de données limitée, lesquelles représentant la grandeur utile acquise à l'instant d'événement (Z) ainsi que la grandeur utile acquise pendant une période d'enregistrement (A) prédéterminée immédiatement après l'instant d'événement (Z).

2. Système (2) selon la revendication précédente, **caractérisé en ce que** le capteur acoustique (4) est disposé à une distance de capteur (D) par rapport au capteur d'utilité (6), la distance de capteur (D) étant inférieure à une distance maximale prédéterminée, notamment d'un maximum de 10 mètres.

3. Système (2) selon l'une des revendications précédentes, **caractérisé en ce que** l'unité à processeur (8) est configurée pour, en se basant sur le signal utile, reconnaître un modèle de référence (24) prédéterminé dans la grandeur utile acquise en continu et, dans le cas d'un modèle de référence (24) reconnu positivement, déterminer un instant de référence (R) du modèle de référence (24) survenu, l'unité à processeur (8) étant configurée pour ne mémoriser les données d'événement dans la mémoire de données (10) que lorsqu'un écart de temps entre l'instant d'événement (Z) et l'instant de référence (R) est inférieur à une valeur de seuil prédéterminée, notamment à 0,5 seconde.

4. Système (2) selon l'une des revendications précédentes, **caractérisé en ce que** l'unité à processeur (8) est configurée pour mémoriser la grandeur utile actuelle respectivement acquise par des données de tampon dans la mémoire de données (10), l'unité à processeur (8) étant configurée pour actualiser continuellement les données de tampon de telle sorte que les données de tampon représentent toujours uniquement la grandeur utile acquise à l'instant actuel et les grandeurs utiles issues d'une période de tampon (U) prédéterminée acquises immédiatement avant l'instant actuel, et l'unité à processeur (8) étant configurée pour mémoriser les données d'événement dans la mémoire de données (10) de telle sorte que les données d'événement représentent la grandeur utile acquise à l'instant d'événement (Z), la grandeur utile issue d'une période écoulée (K) prédéterminée immédiatement avant l'instant d'événement (Z) et la grandeur utile acquise pendant une période d'enregistrement (A) prédéterminée immédiatement après l'instant d'événement (Z), et la période écoulée (K) étant inférieure ou égale à la période de tampon (U).

5. Système (2) selon l'une des revendications précédentes, **caractérisé en ce que** le système (2) possède un premier dispositif (26), lequel comprend le capteur acoustique (4), l'unité à processeur (8) et la mémoire de données (10), et le système (2) possédant un deuxième dispositif (28), lequel comprend le capteur d'utilité (6), le premier et le deuxième dispositif (26, 28) étant connectés par le biais d'une liaison de signal utile (12) sans fil ou filaire afin de transmettre le signal utile du capteur d'utilité (6) à l'unité à processeur (8) par le biais de cette liaison de signal utile (12).

6. Système (2) selon l'une des revendications précédentes, **caractérisé en ce que** le système (2) possède une interface de communication (14) qui est configurée pour la transmission filaire et/ou sans fil d'un signal d'événement qui représente les données d'événement.

7. Système (2) selon l'une des revendications précédentes 5 et 6, **caractérisé en ce que** le premier dispositif (26) comprend l'interface de communication (14).

8. Système (2) selon l'une des revendications précédentes, **caractérisé en ce que** le système (2) possède un écran d'affichage (16), l'unité à processeur (8) étant configurée pour commander l'écran d'affichage (16) directement ou indirectement de telle sorte que l'écran d'affichage (16) représente optiquement la totalité ou une partie des données d'événement par une courbe de signal utile.

9. Système (2) selon la revendication 5 et la revendication 6, **caractérisé en ce que** le premier dispositif (26) comprend l'écran d'affichage (16).

10. Système (2) selon la revendication 5 et notamment selon l'une des revendications précédentes 6 à 9, **caractérisé en ce que** le premier dispositif (26) est réalisé sous la forme d'un téléphone mobile.

11. Système (2) selon la revendication 5 et notamment selon l'une des revendications précédentes 6 à 10, **caractérisé en ce que** le deuxième dispositif (28) est configuré pour être fixé à demeure à un objet, notamment collé, vissé ou fermement serré à l'objet.

12. Système (2) selon l'une des revendications précédentes, **caractérisé en ce que** le système (2) possède une chaussure (38), le capteur d'utilité (6) ou le deuxième dispositif (28) étant fixé à la semelle (40) de la chaussure (38) ou étant incorporé dans la semelle (40) de la chaussure (38).

13. Système (2) selon l'une des revendications précédentes, **caractérisé en ce que** le modèle acoustique prédéterminé correspond à un son qui est produit par le choc d'un club de golf (34) sur une balle de golf (36).

14. Système (2) selon l'une des revendications 1 à 11, **caractérisé en ce que** le système (2) possède une courroie (44), le capteur d'utilité (6) ou le deuxième dispositif (28) étant fixé à courroie (44) ou étant incorporé dans la courroie (44).
